Europäisches Patentamt

European Patent Office

Office européen des brevets

(19)

(11) Veröffentlichungsnummer: **0 057 715**
**B1**

(12) # EUROPÄISCHE PATENTSCHRIFT

(45) Veröffentlichungstag der Patentschrift:
**12.12.84**

(51) Int. Cl.³: **B 65 G 49/06**, B 65 G 57/08

(21) Anmeldenummer: **81902312.8**

(22) Anmeldetag: **07.08.81**

(86) Internationale Anmeldenummer:
**PCT/EP 81/00116**

(87) Internationale Veröffentlichungsnummer:
**WO 82/00628 (04.03.82 Gazette 82/7)**

(54) **VORRICHTUNG ZUM AUFNEHMEN UND UMSETZEN VON TAFELN, INSBESONDERE GLASTAFELN.**

(30) Priorität: **18.08.80 DE 3031135**

(43) Veröffentlichungstag der Anmeldung:
**18.08.82 Patentblatt 82/33**

(45) Bekanntmachung des Hinweises auf die Patenterteilung:
**12.12.84 Patentblatt 84/50**

(84) Benannte Vertragsstaaten:
**DE FR GB**

(56) Entgegenhaltungen:
**DE - A - 1 756 787**
**DE - A - 2 160 765**
**US - A - 3 094 322**

(73) Patentinhaber: **Werner, Johannes,**
**Schmidtheimerstrasse 1,**
**D-5308 Rheinbach-Ramershoven (DE)**

(72) Erfinder: **Werner, Johannes, Schmidtheimerstrasse 1,**
**D-5308 Rheinbach-Ramershoven (DE)**

(74) Vertreter: **Freischem, Werner, Dipl.-Ing. et al,**
**Patentanwälte Dipl.-Ing. W. Freischem Dipl.-Ing. I.**
**Freischem An Gross St. Martin 2, D-5000 Köln 1 (DE)**

**Beschreibung**

Die Erfindung bezieht sich auf eine Vorrichtung zum Aufnehmen und Umsetzen von Tafeln, insbesondere Glastafeln, aus einer im wesentlichen vertikalen Lage in eine im wesentlichen horizontale Lage oder umgekehrt, mit mindestens einem Schwenkarm, der in zwei Endstellungen, nämlich in eine Aufnahmestellung und in eine Abgabestellung und zurück, um eine horizontale Achse schwenkbar ist und an dessen ausschwenkbaren Ende ein Tragrahmen um eine horizontale Achse schwenkbar gelagert ist, der zur Aufnahme jeweils einer Tafel mit Saugnäpfen versehen und zwangsweise so geführt ist, daß er während der Bewegung des Schwenkarmes von einer Endstellung in die andere um einen Winkel von kleiner als 90° um seine Schwenkachse gedreht wird.

Vorrichtungen dieser Art sind beispielsweise bekannt aus Prospekten der Firma Grenzebach oder aus der DE-A-1 756 787. Die bekannten Vorrichtungen sind mit besonderen Antrieben versehen, welche die Drehung des Tragrahmens während der Schwenkbewegung des Schwenkarmes bewerkstelligen. Der Drehantrieb für den Tragrahmen kann von Kurvenscheiben abgeleitet werden und über Ketten auf Zahnräder übertragen werden, die auf der Schwenkachse des Tragrahmens befestigt sind.

Die bekannten Vorrichtungen haben den Nachteil, daß die Schwenkantriebe für den Tragrahmen relativ aufwendig und störanfällig sind und daß bei längerer Betriebsdauer Verschleißerscheinungen auftreten, die eine exakte Führung des Tragrahmens in Frage stellen.

Der vorliegenden Erfindung liegt die Aufgabe zugrunde, eine Vorrichtung zum Aufnehmen und Umsetzen von Tafeln, insbesondere Glastafeln, der eingangs genannten Art derart auszubilden, daß sie bei einfachster Konstruktion auch nach langer Betriebsdauer exakt und zuverlässig arbeitet. Eine derartige robuste Konstruktion wird erfindungsgemäß dadurch erzielt, daß der Tragrahmen mit einer in vertikaler Ebene stehenden Führungsstange starr verbunden ist, die längsverschieblich in einer außerhalb des Schwenkkreises des Schwenkarmes um eine horizontale Achse schwenkbar gelagerten Führungshülse geführt ist. Diese Vorrichtung nach der Erfindung hat den Vorteil, daß beim Verschwenken des Schwenkarmes von der Aufnahmestellung in die Abgabestellung der Tragrahmen von der Führungsstange in die jeweils gewünschte Stellung verschwenkt wird. Da die Führungshülse in einem relativ großen Abstand vom Schwenkkreis des Schwenkarmes und damit auch im relativ großen Abstand von der Schwenkachse des Tragrahmens angeordnet werden kann, sind die Führungskräfte, welche auf die Führungshülse und auf die Führungsstange einwirken, gering.

Vorteilhafterweise sind die Drehachse des Schwenkarmes und die Schwenkachse der Führungshülse derart angeordnet und sind der Radius des Schwenkkreises, der Schwenkwinkel des Schwenkarmes sowie der Winkel zwischen der Ebene des Tragarmes und der Führungsstange derart auf die Aufnahmestellung und Abgabestellung der Tafeln abgestimmt, daß in den Endstellungen des Schwenkarmes die Führungsstange im wesentlichen rechtwinklig zum Schwenkarm steht. Diese Ausbildung hat den erheblichen Vorteil, daß im Bereich der Endstellungen des Schwenkarmes die Drehbewegung des Tragrahmens minimal sind, so daß beispielsweise die horizontale Endstellung des Tragrahmens an die Transporthöhe der Fördervorrichtung in Grenzen angepaßt werden kann und auch die Position des Tragrahmens in der nahezu vertikalen Lage dem Stapelbock angepaßt werden kann.

Weitere Merkmale der Erfindung ergeben sich aus den Patentansprüchen.

Die Erfindung ist in der folgenden Beschreibung unter Bezugnahme auf die Zeichnung, in der Ausführungsbeispiele dargestellt sind, erläutert. In der Zeichnung zeigt

Fig. 1 eine Seitenansicht, und

Fig. 2 eine Frontansicht der Vorrichtung nach der Erfindung,

Fig. 3 eine Frontansicht eines abgewandelten Ausführungsbeispiels der Vorrichtung nach der Erfindung.

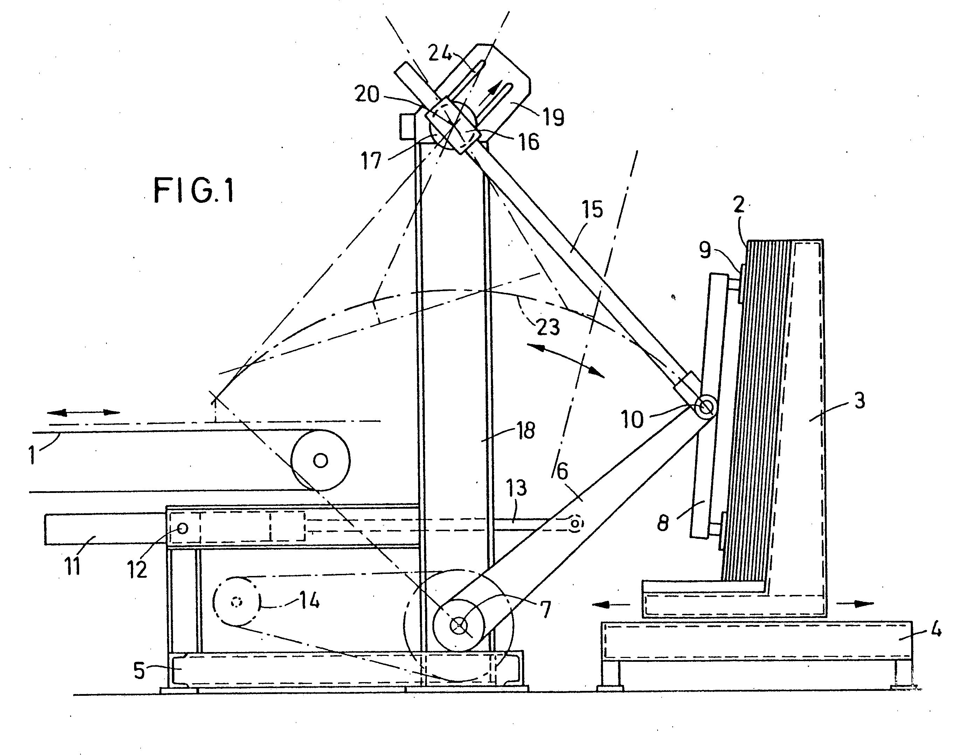

Die in Fig. 1 dargestellte Vorrichtung dient dazu, von der Fördervorrichtung 1, zum Beispiel einem Förderband oder einer Rollenbahn, im wesentlichen horizontal geförderte Glastafeln 2 aufzunehmen und auf einen Glasbock 3 abzusetzen, der die abgesetzten Glastafeln in einer wenig von der lotrechten, abweichenden, geneigten Lage hält. Damit der Abstand der Auflagefläche des Glasbocks 3 von der Fördervorrichtung 1 trotz wachsenden Glasstapels konstant bleibt, ist der Glasbock 3 auf seinem Gestell 4 in Fördervorrichtung der Tafeln 2 taktweise derart verschiebbar, daß nach Absetzen einer Glastafel 2 der Glasbock 3 um die Dicke der abgestellten Glastafel 2 in Förderrichtung der Glastafeln 2 verschoben wird.

Die in Fig. 1 dargestellte Vorrichtung dient aber auch dazu, die auf dem Glasbock 3 gestapelten Glastafeln 2 zu entstapeln und die Glastafeln 2 einzeln vom Glasbock 3 abzunehmen und horizontal auf die Fördervorrichtung 1 abzulegen.

Die erfindungsgemäße Vorrichtung weist ein Maschinengestell 5 auf, in dem ein Schwenkarm 6 um die horizontale Achse 7 verschwenkbar ist. Am oberen ausschwenkbaren Ende des Schwenkarmes 6 ist ein um die horizontale Achse 10 schwenkbarer Tragrahmen 8 gelagert, der mit Saugnäpfen 9 zur Aufnahme der Glastafeln 2 versehen ist. Der Schwenkarm 6 ist mittels eines Antriebes um einen Winkel von vorzugsweise 80 bis 110° schwenkbar. Als Antrieb für den Schwenkarm 6 dient ein Pneumatikzylinder 11, der im Maschinengestell 5 um die Achse 12 schwenkbar gehalten ist und dessen Kolbenstange 13 mit dem vorderen Ende am Schwenkarm 6 angelenkt ist.

Anstelle des Pneumatikzylinders 11 kann der Antrieb aber auch mittels eines strichpunktiert eingezeichneten Getriebemotors 14 erfolgen. Diese Antriebsart ist jedoch aufwendiger.

Damit beim Umsetzen der Glastafeln 2 von der Fördervorrichtung 1 auf den Glasbock 3 oder umgekehrt die aufgenommene Glastafel 2 um einen Winkel von kleiner als 90° geschwenkt wird, und zwar dann, wenn sie einen genügend großen Abstand sowohl vom Glasbock 3 als auch von der Fördervorrichtung 1 hat, dient eine fest mit dem Tragrahmen 8 verbundene Führungsstange 15, die längsverschieblich in einer außerhalb des Schwenkkreises 23 des Schwenkarmes 6 um eine horizontale Achse 20 schwenkbar gelagerte Führungshülle 16 geführt ist.

Die Anordnung der Schwenkachse 7 des Schwenkarmes 6 und der Schwenkachse 20 der Führungshülse 16 sowie die Größe des Radius des Schwenkkreises 23 und des Winkels zwischen der Führungsstange 15 und der Ebene des Tragarmes 8 sind derart, daß die Führungsstange 15 in den Endstellungen des Schwenkarmes 6 im wesentlichen rechtwinklig zum Schwenkarm 6 steht. Das hat die Wirkung, daß der Tragrahmen 8 nur noch minimal um die Achse 10 des Tragrahmens 8 geschwenkt wird, wenn sich der Schwenkarm 6 den Endstellungen nähert und daß die Schwenkbewegung des Tragrahmens 8 um die Achse 10 im wesentlichen dann erfolgt, wenn der Schwenkarm 6 den mittleren Bereich seines Schwenkbereiches durchfährt.

Es ist auch möglich, die Führungsstange 15 nicht von der Schwenkachse 10 des Tragrahmens 8 ausgehen zu lassen, sondern von einem anderen Punkt des Tragrahmens 8. Dadurch verändert sich allerdings etwas die Kinematik der Vorrichtung.

Um die erfindungsgemäße Vorrichtung den praktischen Gegebenheiten anpassen zu können, kann es zweckmäßig sein, die Führungsstange 15 derart am Tragrahmen 8 zu befestigen, daß der Winkel zwischen der Führungsstange 15 und der Ebene des Tragrahmens 8 einstellbar ist.

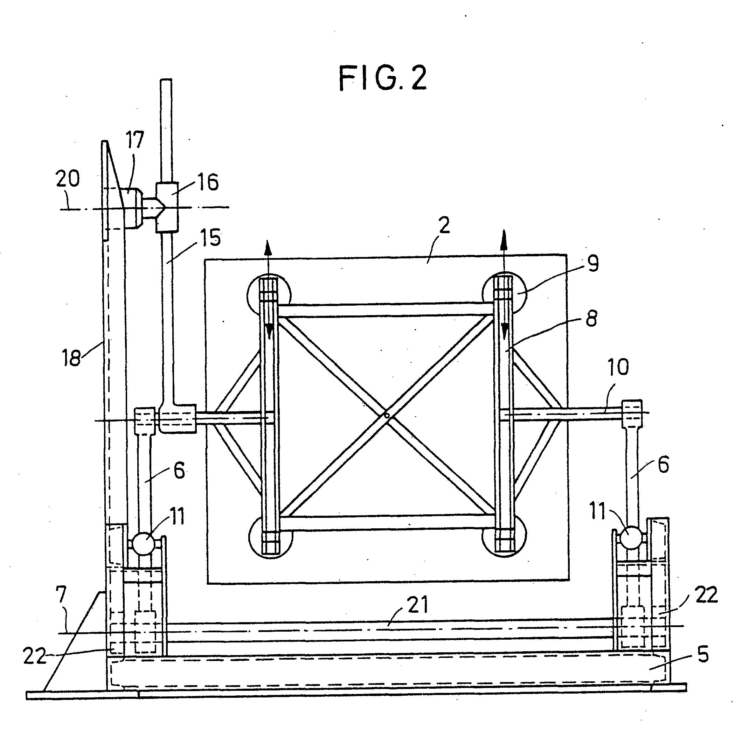

Wie die Fig. 2 zeigt, kann der Tragrahmen 8 von zwei seitlich des Tragrahmens 8 angeordneten Schwenkarmen 6 gehalten werden, die über eine Verbindungswelle 21 miteinander verbunden sind. Die Verbindungswelle 21 ist über mindestens zwei Lager 22 im Maschinengestell 5 gelagert. Um die Lager 22 und die Verbindungswelle 21 weitgehend zu entlasten, kann es zweckmäßig sein, jeden Schwenkarm durch einen Pneumatikzylinder 11 anzutreiben. Die Pneumatikzylinder 11 sind dann parallel geschaltet.

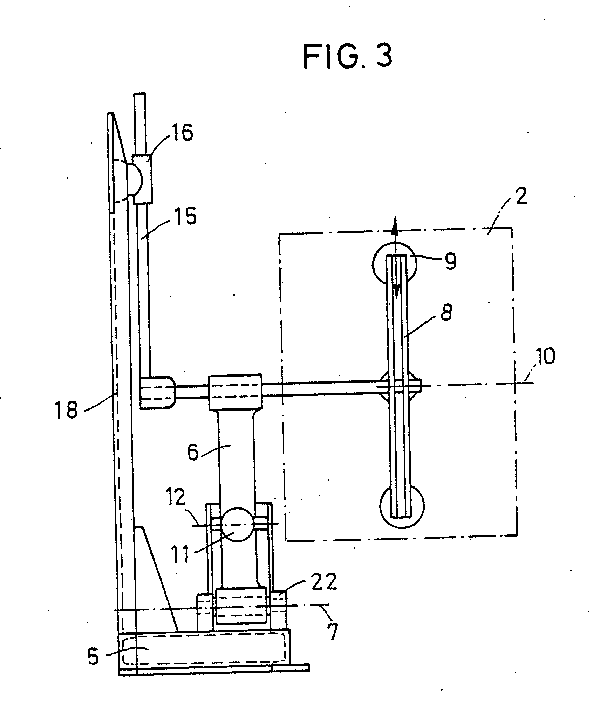

Wie die Fig. 3 zeigt, ist aber auch eine fliehende Lagerung des Tragrahmens 8 möglich, insbesondere dann, wenn relativ schmale Glastafeln 2 umgesetzt werden sollen. In diesem Falle ist es zweckmäßig, den Schwenkarm 6 zwischen den Tragrahmen 8 und der Führungsstange 15 anzuordnen.

Wie die Fig. 1 zeigt, ist das Schwenklager 17 der Führungshülse 16 in einem vertikalen Pfosten 18 gelagert. Am Pfosten 18 ist eine Führungsplatte 19 angebracht, die es ermöglicht, das Schwenklager 17 zu verschieben. Die Führungsnuten 24 in dieser Führungsplatte 19 verlaufen parallel zum Schwenkarm 6 in eine Endstellung beziehungsweise parallel zu der in der anderen Endstellung durch die Schwenkachse 10 des Tragrahmens 8 verlaufende Tangente an den Schwenkkreis 23. Durch Verschieben des Schwenklagers 17 entlang den Führungsnuten 24 wird erreicht, daß sich an der Endstellung des Tragrahmens 8 oberhalb der Fördereinrichtung 1 nichts ändert, während die Position des Tragrahmens 8 am Lagerbock 3 sich ändert und somit den jeweiligen Verhältnissen am Lagerbock 3 angepaßt werden kann.

**Patentansprüche**

1. Vorrichtung zum Aufnehmen und Umsetzen von Tafeln, insbesondere Glastafeln (2) aus einer im wesentlichen vertikalen Lage in eine im wesentlichen horizontale Lage oder umgekehrt, mit mindestens einem Schwenkarm (6), der in zwei Endstellungen, nämlich in eine Aufnahmestellung und in eine Abgabestellung und zurück, um eine horizontale Achse (7) schwenkbar ist und an dessen ausschwenkbaren Ende ein Tragrahmen (8) um eine horizontale Achse (10) schwenkbar gelagert ist, der zur Aufnahme jeweils einer Tafel mit Saugnäpfen (9) versehen und zwangsweise so geführt ist, daß er während der Bewegung des Schwenkarmes (6) von einer Endstellung in die andere um einen Winkel kleiner als 90° um seine Schwenkachse (10) gedreht wird, dadurch gekennzeichnet, daß der Tragrahmen (8) mit einer in vertikaler Ebene stehenden Führungsstange (15) starr verbunden ist, die längsverschieblich in einer außerhalb des Schwenkkreises (23) des Schwenkarmes (6) um eine horizontale Achse (20) schwenkbar gelagerten Führungshülse (16) geführt ist.

2. Vorrichtung nach Anspruch 1, dadurch gekennzeichnet, daß die Führungsstange (15) drehfest mit der Schwenkachse (10) des Tragrahmens (8) verbunden ist.

3. Vorrichtung nach Anspruch 1 oder 2, dadurch gekennzeichnet, daß die Schwenkachse (7) des Schwenkarmes (6) und die Schwenkachse (20) der Führungshülse (16) derart angeordnet und der Radius des Schwenkkreises (23), der Schwenkwinkel des Schwenkarmes sowie der Winkel zwischen der Ebene des Tragrahmens (8) und der Führungsstange (15) derart auf die Aufnahmestellung und Abgabestellung der Tafeln (2) abgestimmt sind, daß in den Endstellungen des Schwenkarmes (6) die Führungsstange (15) im wesentlichen rechtwinklig zum Schwenkarm (6) steht.

4. Vorrichtung nach Anspruch 3, dadurch gekennzeichnet, daß der Schwenkwinkel des Schwenkarmes (6) im Bereich von 80 bis 100° liegt und der Abstand der Schwenkachse (7) des Schwenkarmes (6) von der Schwenkachse (20) der Führungshülse (16) im wesentlichen dem Abstand der Endstellungen der Schwenkachse (10) des Tragrahmens (8) entspricht.

5. Vorrichtung nach einem der Ansprüche 1 bis 4, dadurch gekennzeichnet, daß das Schwenklager (17) der Führungshülse (17) parallel zu der in einer Endstellung des Schwenkarmes (6) durch die Schwenkachse (10) des Tragrahmens (8) verlaufende Tangente verschiebbar und feststellbar ist.

6. Vorrichtung nach einem der Ansprüche 1 bis 5, dadurch gekennzeichnet, daß der Winkel zwischen der Führungsstange (15) und der Ebene des Tragrahmens (8) einstellbar ist.

7. Vorrichtung nach einem der Ansprüche 1 bis 6, dadurch gekennzeichnet, daß zu beiden Seiten des Tragrahmens (8) je ein Schwenkarm (6) angeordnet ist und die beiden Schwenkarme (6) über eine Verbindungswelle (21) drehfest miteinander verbunden sind.

## Claims

1. Device for receiving and transposing of plates, in particular glass plates (2) from a substantially vertical position into a substantially horizontal position, or in reverse, with at least one pivot arm (6) which is pivotable around a horizontal axis (7) into two end positions, namely into a receiving position and into a release position and back, whereby at the pivotable end of this pivot arm, a support frame (8) is pivotably mounted around a horizontal axis (10) which is provided with suction cups (9) for receiving a plate and which is so guided that it is moved at an angle around its pivot axis (10) which is smaller than 90° during the movement of the pivot arm (6) from an end position into the other position, characterized in that the support frame (8) is rigidly connected with a guide rod (15) which is positioned in a vertical plane and which is guided longitudinally displaceable in a guide bushing (16) which is pivotably mounted around a horizontal axis (20) outside of the pivot radius (23) of pivot arm (6).

2. Device in accordance with claim 1, characterized in that the guide rod (15) is rigidly connected with the pivot axis (10) of support frame (8).

3. Device in accordance with claim 1 or 2, characterized in that the pivot axis (7) of the pivot arm (6) and the pivot axis (20) of the guide bushing (16) are so disposed, and the radius of the pivot radius (23), the pivot angle of the pivot arm as well as the angle between the plate of the support frame (8) and the guide rod (15) are so coordinated to the receiving position and release position of plates (2), that the guide rod (15) is disposed substantially at a right angle with respect to the pivot arm (6) in the end positions of pivot arm (6).

4. Device in accordance with claim 3, characterized in that the pivot angle of the pivot arm (6) is in the area of 80 to 100° and that the distance of the pivot axis (7) of the pivot arm (6) from pivot axis (20) of guide bushing (16) substantially corresponds to the distance of the end positions of the pivot axis (10) of the support frame (8).

5. Device in accordance with one of claims 1 to 4, characterized in that the pivot support (17) of guide bushing (16) is displaceable and lockable by a tangent which extends parallel to an end position of the pivot arm (6) and through the pivot axis (10) of support frame (8).

6. Device in accordance with one of claims 1 to 5, characterized in that the angle between the guide rod (15) and the plane of the support frame (8) is adjustable.

7. Device in accordance with one of claims 1 to 6, characterized in that one each pivot arm (6) is provided at both sides of the support frame (8) and the two pivot arms (6) are fixedly connected with each other by a connecting shaft (21).

## Revendications

1. Dispositif pour saisir et déplacer des plaques, en particulier des plaques ou feuilles de verre (2), depuis une position sensiblement verticale dans une position sensiblement horizontale, ou inversement, à l'aide d'au moins un bras basculant (6), basculable autour d'un axe horizontal (7) entre deux positions extrêmes, notamment une position de saisie et une position de dépôt et inversement, et à l'extrémité basculable duquel est disposé un cadre porteur (8), basculable autour d'un axe horizontal (10), qui est muni de ventouses (9) pour la saisie d'une plaque à la fois et est dirigé de telle sorte que, pendant le mouvement du bras basculant (6) d'une des positions extrêmes à l'autre, il est tourné d'un angle inférieur à 90° autour de son axe de basculement (10), caractérisé:
en ce que, le cadre porteur (8) est relié de manière rigide à une tige de guidage (15), située dans un plan vertical, qui est guidée longitudinalement de manière coulissante dans une douille de guidage (16), basculable autour d'un axe horizontal (20), située hors du cercle de basculement (23) du bras basculant (6).

2. Dispositif selon la revendication 1, caractérisé en ce que la tige de guidage (15) est reliée, de manière non pivotante, à l'axe de basculement (10) du cadre porteur (8).

3. Dispositif selon l'une des revendications 1 et 2, caractérisé:

— en ce que l'axe de basculement (7) du bras basculant (6) et l'axe de basculement (20) de la douille de guidage (16) d'une part sont disposés de telle sorte,

— en ce que le rayon du cercle de basculement (23), l'angle de basculement du bras basculant ainsi qu l'angle entre le plan du cadre porteur (8) et la tige de guidage (15) d'autre part sont réglés sur la position de saisie et en position de dépôt des plaques (2) de telle sorte,

— et en ce que dans les positions extrêmes du bras basculant (6), la tige de guidage (15) se trouve sensiblement perpendiculaire par rapport au bras basculant (6).

4. Dispositif selon la revendication 3, caractérisé en ce que l'angle de basculement du bras basculant (6) est environ de 80 à 100° et que la distance de l'axe de basculement (7) du bras basculant (6) à l'axe de basculement (20) de la douille de guidage (16) correspond sensiblement à la distance des positions extrêmes de l'axe de basculement (10) du cadre porteur (8).

5. Dispositif selon l'une des revendications 1 à 4, caractérisé en ce que le palier de basculement (17) de la douille de guidage (16) est déplaçable parallèlement à la tangente passant, pour une position extrême du bras basculant (6), par l'axe de basculement (10) du cadre porteur (8) et peut être bloqué.

6. Dispositif selon l'une des revendications 1 à 5, caractérisé en ce que l'angle de la tige de guidage (15) avec le plan du cadre porteur (8) est réglable.

7. Dispositif selon l'une des revendications 1 à 6, caractérisé en ce que, de chaque côté du cadre porteur (8), est disposé un bras basculant (6) et que les deux bras basculants (6) sont reliés ensemble et de manière non pivotante, par un axe de liaison (21).

FIG.1

# FIG.2

# FIG. 3